# EUROPÄISCHE PATENTANMELDUNG

(11) **EP 1 881 239 A2**
(43) Veröffentlichungstag der Anmeldung: **23.01.2008**
(21) Anmeldenummer: 07014137.9
(22) Anmeldetag: 19.07.2007
(51) Int. Cl.: F16H 61/30, F16H 61/688

(54) **Hydraulisches System zur Steuerung eines Doppelkupplungsgetriebes**

(30) Priorität: 22.07.2006 DE 102006034012
(71) Anmelder: LuK Lamellen und Kupplungsbau Beteiligungs KG, 77815 Bühl (DE)
(72) Erfinder: Berger, Reinhard, Dr., 77815 Bühl (DE); Dreher, Felix, 79219 Staufen im Breisgau (DE)

(57) **Zusammenfassung**

Hydraulisches System zur Steuerung eines Doppelkupplungsgetriebes, wobei das Doppelkupplungsgetriebe zwei Getriebestränge umfasst, die jeweils mittels einer Fahrzeugkupplung mit einer Kurbelwelle einer Kraftmaschine verbindbar sind, wobei die Getriebestränge schaltbare Gänge umfassen, die durch hydraulisch mit Druck beaufschlagbare Doppelkolben geschaltet werden.

Das hydraulische System umfasst einen Wählschieber, durch den in beiden Getriebesträngen jeweils genau ein Doppelkolben hydraulisch leitend mit je einem dem Getriebestrang zugeordneten Schaltwegregelventil, das den Fluss von Hydraulikfluid in beide Durchflussrichtungen steuern kann, verbunden wird.

## Beschreibung

Die vorliegende Erfindung betrifft ein hydraulisches System zur Steuerung eines Doppelkupplungsgetriebes, wobei das Doppelkupplungsgetriebe zwei Getriebestränge umfasst, die jeweils mittels einer Fahrzeugkupplung mit einer Kurbelwelle einer Kraftmaschine verbindbar sind, wobei die Getriebestränge schaltbare Gänge umfassen, die durch hydraulisch mit Druck beaufschlagbare Doppelkolben geschaltet werden.

Ein gattungsbildendes hydraulisches System ist beispielsweise aus der DE 102005019586 bekannt. Die dort vorgestellte Lösung benötigt eine Vielzahl an Proportionalventilen.

Eine Aufgabe der vorliegenden Erfindung ist es, ein hydraulisches System zur Steuerung eines Doppelkupplungsgetriebes bereitzustellen, das einfacher aufgebaut ist. Insbesondere ist es eine Aufgabe der vorliegenden Erfindung, die Anzahl an Proportionalventilen zu verringern.

Dieses Problem wird gelöst durch ein hydraulisches System zur Steuerung eines Doppelkupplungsgetriebes, wobei das Doppelkupplungsgetriebe zwei Getriebestränge umfasst, die jeweils mittels einer Fahrzeugkupplung mit einer Kurbelwelle einer Kraftmaschine verbindbar sind, wobei die Getriebestränge schaltbare Gänge umfassen, die durch hydraulisch mit Druck beaufschlagbare Doppelkolben geschaltet werden, wobei das hydraulische System einen Wählschieber umfasst, durch den in beiden Getriebesträngen jeweils genau ein Doppelkolben hydraulisch leitend mit je einem dem Getriebestrang zugeordneten Schaltwegregelventil, das den Fluss von Hydraulikfluid in beide Durchflussrichtungen steuern kann, verbunden wird. Es sind also zwei Schaltwegregelventile vorhanden, die vorzugsweise identisch aufgebaut sind. Über den Wählschieber wird also für jeden Getriebestrang genau ein Doppelkolben ausgewählt, über das jeweils dem Getriebestrang zugeordnete Schaltwegregelventil wird die Durchflussrichtung und Durchflussmenge bzw. die Durchflussrichtung und der Hydraulikdruck eingestellt. Die Doppelkolben werden dabei vorzugsweise weggesteuert betrieben, dazu liefert pro Doppelkolben je ein Wegsensor ein entsprechendes Wegsignal für eine Steuerung bzw. Regelung. Der Wählschieber halt also eine Funktion ähnlich eines Schrittschalters. Vorzugsweise ist vorgesehen, das Dopplungskupplungsgetriebe n Gänge in zwei Getriebesträngen umfasst und der Wählschieber ein (n + 4)/(n/4)-Wegeventil ist. Es sind also für jeden Doppelkolben zwei Anschlüsse bzw. Ausgänge des Wählschiebers vorgesehen sowie für jeden Getriebestrang zwei Eingänge für den Wählschieber vorgesehen. Für jeden Doppelkolben, der in einem Getriebestrang vorgesehen ist, ist eine Schaltstellung des Wählschiebers vorgesehen. Bei einem 8-Ganggetriebe in zwei Getriebesträngen ist daher ein 12-Wegeventil vorgesehen, das zwei Ventilstellungen aufweist. Bei einem Zwölfganggetriebe wäre entsprechend ein 16-Wegeventil mit drei Ventilstellungen vorzusehen. Bei einem hydraulischen System für ein Achtgang-Doppelkupplungsgetriebe ist vorzugsweise vorgesehen, dass der Wählschieber ein 6/2-Wegeventil ist. Alternativ kann vorgesehen sein, dass der Wählschieber ein 8/2-Wegenventil ist, wobei jeweils zwei Eingänge auf eine gemeinsame hydraulische Leitung geschaltet sind. Das einem Getriebestrang zugeordnete Schaltwegregelventil ist vorzugsweise ein stufenlos verstellbares Proportionalventil und weiter vorzugsweise ein 4/4-Wegeventil oder ein 3/4-Wegeventil. In einer Weiterbildung des erfindungsgemäßen hydraulischen Systems kann vorgesehen sein, dass das Schaltwegregelventil ausgangsseitig, d.h. doppelkolbenseitig, Druckrückführungen umfasst, die so angeordnet sind, dass auf ein Schaltmittel des Schaltwegregelventils eine Stellkraft ausgeübt wird. Das Schaltmittel ist vorzugsweise ein Steuerkolben des Schaltwegregelventils. Vorzugsweise ist vorgesehen, dass sowohl der Wählschieber als auch die Schaltwegregelventile jeweils durch einen elektrischen Aktor betätigt werden. Vorzugsweise ist vorgesehen, dass das Schaltwegregelventil bei stromlosem Aktor einen ersten Eingang mit einem ersten Ausgang sowie einen zweiten Eingang mit einem zweiten Ausgang verbindet und bei maximal bestromten Aktor den ersten Eingang mit dem zweiten Ausgang sowie den zweiten Eingang mit dem ersten Ausgang verbindet und bei etwa mittlerer Bestromung geschlossen ist. Vorzugsweise ist vorgesehen, dass die Fahrzeugkupplungen mittels hydraulischer Betätigungsmittel, insbesondere Hydraulikkolben, angesteuert werden, wobei die hydraulischen Betätigungsmittel jeweils durch ein Kupplungssteuerventil, das als Proportionalventil und insbesondere als 3/2-Wegeventil ausgeführt ist, angesteuert werden. Die Schaltwegregelventile sowie die Kupplungssteuerventile sind vorzugsweise über ein gemeinsames Abschaltventil, das ein Proportionalventil oder ein Schaltventil ist, mit einem Druckerzeugungsmittel verbunden. Das Abschaltventil kann als Proportionalventil der Druckregelung dienen, kann las Schaltventil aber auch rein als Notöffnungsventil dienen. Das Abschaltventil ist vorzugsweise ein 3/2-Wegeventil. Das Druckerzeugungsmittel umfasst vorzugsweise eine Hydraulikpumpe sowie einen Druckspeicher. Bei einem hydraulischen System zur Verwendung mit einem Doppelkupplungsgetriebe mit acht Gängen ist vorzugsweise vorgesehen, dass das hydraulische System sieben Schieberventile umfasst, wobei davon fünf Proportionalventile und zwei Schaltventile sind. Alternativ kann vorgesehen sein, dass das hydraulische System sechs Schieberventile umfasst, davon fünf Proportionalventile und ein Schaltventil. Weiter alternativ kann vorgesehen sein, dass von den sechs Schieberventilen vier Proportionalventile sind und zwei Schaltventile. Das eingangs genannte Problem wird auch gelöst durch ein Doppelkupplungsgetriebe mit einem hydraulischen System nach einem der vorhergehenden Ansprüche.

Im Folgenden werden Ausführungsbeispiele der Erfindung anhand der beiliegenden Zeichnungen erläutert. Dabei zeigen:
- Fig. 1: eine schematische Darstellung eines hydraulisch geschalteten Doppelkupplungsgetriebes;
- Fig. 2: ein erstes Ausführungsbeispiel eines erfindungsgemäßen hydraulischen Systems zur Schaltung eines Doppelkupplungsgetriebes;
- Fig. 3: ein zweites Ausführungsbeispiel eines hydraulischen Systems zur Schaltung eines Doppelkupplungsgetriebes;
- Fig. 4: ein drittes Ausführungsbeispiel eines hydraulischen Systems zur Schaltung eines Doppelkupplungsgetriebes.

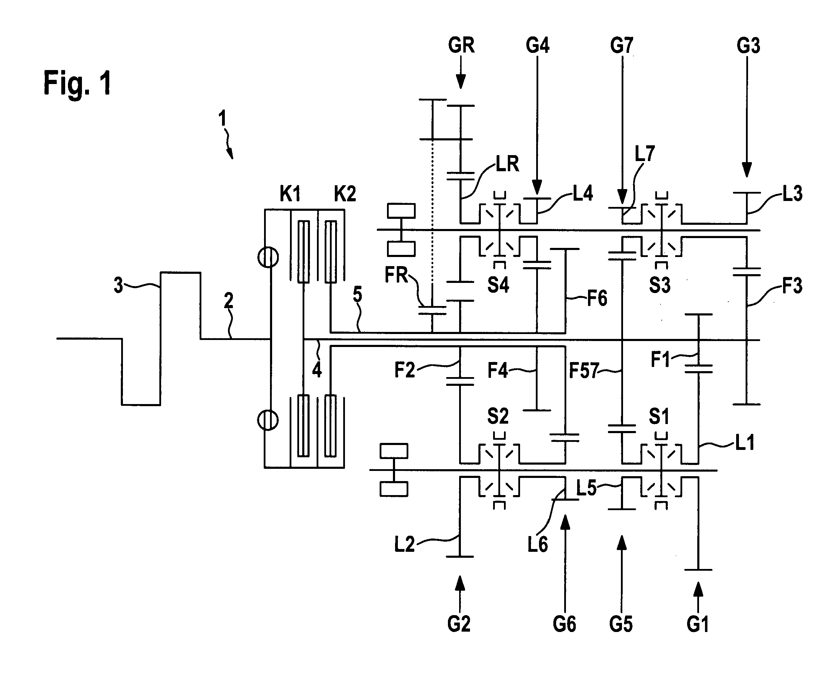

Ein an sich bekanntes Doppelkupplungsgetriebe 1 umfasst eine Antriebswelle 2, die von einer Kurbelwelle 3 einer Brennkraftmaschine angetrieben wird. Das Getriebe umfasst eine innere Eingangswelle 4 sowie eine äußere Eingangswelle 5. Die innere Eingangswelle 4 und die äußere Eingangswelle 5 sind konzentrisch angeordnet. Die innere Eingangswelle 4 kann mittels einer ersten Kupplung K1 mit der Antriebswelle 2 verbunden werden, unabhängig davon kann die äußere Eingangswelle 5 mittels einer Kupplung K2 mit der Antriebswelle 2 verbunden werden. Die innere und äußere Eingangswelle bilden mit den ihnen nachgeschalteten Getriebeelementen jeweils einen Getriebestrang bzw. ein Teilgetriebe. Die geraden Gänge bilden dabei den einen Getriebestrang, die ungeraden Gänge bilden den anderen Getriebestrang. Auf der inneren Eingangswelle 4 sind mehrere Festräder, hier F1, F3, F57, für ungerade Gänge, auf der äußeren Eingangswelle 5 sind mehrere Festräder F2, F4, F6, FR für gerade Gänge sowie den Rückwärtsgang angeordnet. Jedem Festrad Fn ist ein entsprechendes Losrad L1 bis L7 bzw. LR zugeordnet. Bei dem Doppelkupplungsgetriebe gemäß Fig. 1 sind die Losräder L5 und L7 mit dem gleichen Festrad gekoppelt, das hier als F57 bezeichnet ist. Die Losräder Ln sind jeweils mit Schaltmuffen S1 bis S4 mit einer ersten Abtriebswelle 6 bzw. einer zweiten Abtriebswelle 7 verbindbar. Die Abtriebswellen 6, 7 wirken über nicht dargestellte Koppelelemente wie z.B. Zahnräder oder dergleichen auf eine gemeinsamen Abtriebswelle.

Das anhand der Fig. 1 dargestellte Doppelkupplungsgetriebe ist an sich bekannt und wird z.B. für Front-Queranwendungen verwendet. Ben dem Doppelkupplungsgetriebe gemäß Fig. 1 gibt es auf jeder der beiden Abtriebwellen Schaltelemente für Übersetzungsstufen beider Getriebestränge bzw. Teilgetriebe, also für gerade und ungerade Gänge.

Die Schaltmuffen S1 bis S4 weisen jeweils drei Stellungen auf, eine neutrale Mittelstellung, sowie zwei Endstellungen, mit denen jeweils einer der beiden zugeordneten Gänge geschaltet wird. Die Gänge sind durch G1 bis G7 bzw. GR bezeichnet. Auf Einzelheiten wie Zwischenstellungen für eine Synchronisierung und dergleichen soll hier nicht eingegangen werden. Die Schaltmuffen S1 bis S4 werden durch hydraulische Doppelkolben, die in Fig. 1 nicht dargestellt sind, betätigt.

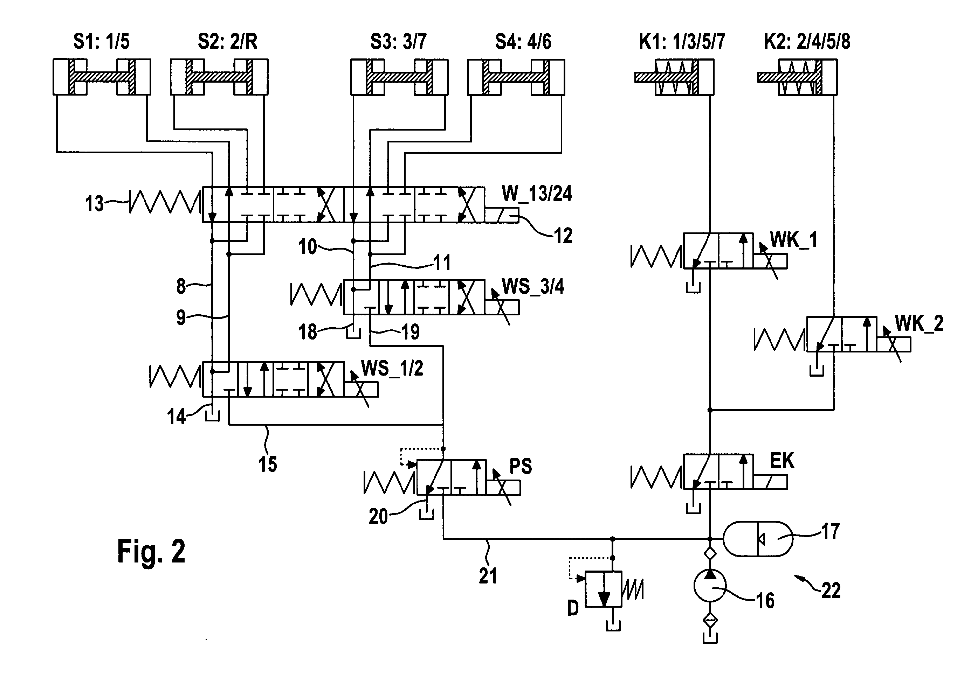

Fig. 2 zeigt ein hydraulisches System mit Doppelkolben zur Betätigung der Schaltmuffen S1 bis S4 in Fig. 1 sowie mit Hydraulikkolben zur Betätigung der Kupplungen K1 und K2. Die Doppelkolben sind in Fig. 2 jeweils mit S1, S2, S3 sowie S4 entsprechend der Bezeichnung der zugehörigen Schaltmuffen bezeichnet, die Kolben zur Kupplungsbetätigung sind wie die zugehörigen Kupplungen in Fig. 1, also mit K1 und K2 bezeichnet. Der Doppelkolben S1 dient dabei, wie anhand der Fig. 1 zu erkennen ist, der Schaltung der Gänge 1 und 5, der Doppelkolben S2 dient der Schaltung der Gänge 2 und Rückwärtsgang, der Doppelkolben S3 dient der Schaltung der Gänge 3 und 7 und der Doppelkolben S4 dient der Schaltung der Gänge 4 und 6. Entsprechend können durch die Kupplung K1 und damit den Kolben K1 der Getriebestrang für die Gänge 1, 3, 5 sowie 7 ein- und ausgekuppelt werden und durch die Kupplung K2 bzw. den Kolben K2 der Getriebestrang für die Gänge 2, 4, 5 und Rückwärtsgang ein- und ausgekuppelt werden.

Die hydraulischen Elemente sind nach DIN ISO 1219 dargstellt. Unter einem Proportionalventil wird hier ein Ventil verstanden, das neben ausgewiesenen Schaltstellungen beliebig viele Zwischenstellungen einnehmen kann. Unter einem Schaltventil wird ein Ventil verstanden, das nur ausgewiesene Schaltstellungen einnehmen kann. Mit Hilfe der Proportionalventile können über das anliegende Stellsignal die Höhe und Richtung des Volumenstroms beeinflusst werden. Mit Schaltventilen kann nur der Ein-/Aus Zustand und ggf. die Richtung des Volumenstroms über das anliegende Stellsignal angegeben werden.

Das hydraulische System gemäß Fig. 2 umfasst einen Wählschieber W_13/24, mit dem wahlweise und abwechselnd entweder die beiden Eingänge des Doppelkolbens S1 mit einer Hydraulikleitung 8 bzw. einer Hydraulikleitung 9 sowie die beiden Eingänge des Doppelkolbens S3 mit einer Hydraulikleitung 10 bzw. einer Hydraulikleitung 11 verbunden werden können oder die beiden Eingänge des Doppelkolbens S2 mit den Hydraulikleitungen 8 bzw. 9 und die beiden Eingänge des Doppelkolbens S4 mit den Hydraulikleitungen 10 bzw. 11 verbunden werden können. Es handelt sich bei dem Wählschieber W_13/24 also um ein Schaltventil mit zwei Schalterstellungen, das die Hydraulikleitungen 8, 9, bzw. 10, 11 jeweils zwischen zwei Doppelkolben umschaltet. Der Wählschieber W_13/24 ist folglich ein insgesamt 12-Wegeventil, das sich aus zwei gleichartigen 6-Wegeventilen, die gemeinsam betätigt werden, zusammensetzt. Im Ausführungsbeispiel der Fig. 2 wurden die 6-Wegeventile durch insgesamt vier 4-Wegeventile, bei denen jeweils zwei Eingänge miteinander verbunden sind, realisiert. Im Ausführungsbeispiel der Fig. 2 sind somit acht 4-Wegeventile nebeneinander angeordnet und werden gemeinsam geschaltet. Der Wählschieber W_13/24 weist zwei Schaltstellungen auf, zum einen die in Fig. 2 dargestellte Schaltstellung, zum anderen eine Schaltstellung, bei der der Schaltschieber um zwei Ventilpositionen nach links verschoben ist, so dass also statt der Doppelkolben S1 und S3 die Doppelkolben S2 und S4 mit den Hydraulikleitungen 8 bis 11 verbunden sind. Der Wählschieber W_13/24 wird durch einen elektromagnetischen Aktor 12 gegen die Kraft einer Feder 13 betätigt. Die Schaltstellung gemäß Fig. 2 ist die Schaltstellung bei stromlosem Aktor 12. Die Hydraulikleitungen 8, 9 bzw. 10, 11 sind jeweils mit Schaltwegregelventil WS_1/2 bzw. WS_3/4 verbunden, die eine druck- und/oder weggeregelte Ansteuerung der ausgewählten Schaltelemente ermöglichen. Mit dem Schaltwegregelventil WS_1/2 wird dabei abhängig von der Schaltstellung des Wählschieber W_13/24 entweder der Doppelkolben S1 oder der Doppelkolben S2 angesteuert, mit dem Schaltwegregelventil WS_3/4 wird entsprechend abhängig von der Schaltstellung des Wählschiebers W_13/24 entweder der Doppelkolben S3 oder der Doppelkolben S4 angesteuert. Die Schaltwegregelventile WS_1/2 und WS_3/4 sind 4/4-Wegeventile und als Proportionalventile ausgeführt, weisen also vier Ein- bzw. Ausgänge sowie vier verschiedene Schaltstellungen und beliebig viele Zwischenstellungen auf. Die Ventilschieber der Schaltwegregelventile WS_1/2 und WS_3/4 können also zwischen den Schaltstellungen beliebig positioniert werden. Die Hydraulikleitungen 8 und 9 sind mit Ausgängen des Schaltwegregelventils WS_1/2 verbunden, die Hydraulikleitungen 10 und 11 sind mit Ausgängen des Schaltwegregelventils WS_3/4 verbunden. Ein Eingang 14 des Schaltwegregelventils WS_1/2 ist mit einem niedrigen Systemdruck P_N beaufschlagt, ein Eingang 15 des Schaltwegregelventils WS_1/2 ist mit einem hohen Systemdruck P_H beaufschlagt. Der niedrige Systemdruck P_N ist vorzugsweise der Druck in einem Hydraulikreservoir des Systems, das kann beispielsweise der Umgebungsdruck sein. Der hohe Systemdruck P_H wird durch eine Druckerzeugungseinheit 22 bereitgestellt, die eine Hydraulikpumpe 16 sowie einen Druckspeicher 17 umfasst. Entsprechend dem Schaltwegregelventil WS_1/2 liegt an einem Eingang 18 des Schaltwegregelventils WS_3/4 der niedrige Systemdruck P_N und an einem Eingang 19 der hohe Systemdruck P_H an. Die beiden Schaltwegregelventile WS_1/2 und WS_3/4 haben jeweils identische Schaltstellungen, von denen in einer Schaltstellung beide Ausgänge mit dem Eingang, an dem der niedrige Systemdruck anliegt, verbunden sind, in einer weiteren Stellung jeweils ein Eingang mit einem Ausgang und in einer weiteren Schaltstellung der jeweilige Eingang mit dem anderen Ausgang verbunden ist. Zusätzlich umfassen die Schaltwegregelventile WS_1/2 eine Stellung, in der sämtliche Ein-und Ausgänge gesperrt sind. Diese Schaltzustände sind jeweils durch Pfeile bzw. Linien in Fig. 2 dargestellt, die die jeweiligen Ein- und Ausgänge miteinander verbinden. Dabei stehen T-förmige Linienenden für einen gesperrten Ein- bzw. Ausgang. Dies entspricht der üblichen Darstellung in Hydraulikschaltplänen gemäß DIN/ISO 1219. Die Eingänge 15 und 19 der Schaltwegregelventile WS_1/2 und WS_3/4 sind mit einem Druckregelventil PS verbunden, welches ein 3/2-Wegeventil ist und als Proportionalventil zwei ausgewiesene Schaltstellungen und beliebig viele Zwischenstellungen hat. Das Druckregelventil PS verfügt über einen Eingang 20, an dem der niedrige Systemdruck P_N anliegt und einen Eingang 21, an dem der hohe Systemdruck P_H anliegt. Der Eingang 21 ist mit der Druckerzeugungseinheit 22 umfassend den Druckspeicher 17 und die Hydraulikpumpe 16 verbunden. Parallel zu der Druckerzeugungseinheit ist ein Druckbegrenzungsventil D angeordnet.

Die Kupplungszylinder K1 und K2 sind jeweils über ein Kupplungssteuerventil WK_1 bzw. WK_2, die als Proportionalventil ausgeführte 3/2-Wegeventile sind, und ein als Schaltventil ausgeführtes 3/2-Wegeventil EK, hier als Notöffnungsventil bezeichnet, mit der Druckerzeugungseinheit 22 verbunden. Das Notöffnungsventil EK dient der Notabschaltung, in dem in Fig. 2 dargestellten stromlosen Zustand des zugehörigen elektromagnetischen Aktors sind die Eingänge der Kupplungssteuerventile WK_1 und WK_2 jeweils mit dem niedrigen Systemdruck P_N verbunden, in der bestromten Schaltstellung sind beide Eingänge mit dem hohen Systemdruck verbunden, so dass eine Druckregelung der Kolben über die Kupplungssteuerventile WK_1 und WK_2 möglich ist. Im stromlosen Zustand des Schaltventils EK sind folglich beide Kupplungen K1 und K2 geöffnet. Im stromlosen Zustand des Druckregelventils PS sowie der Schaltwegregelventile WS_1/2 und WS_3/4 sowie des Schieberventils W_13/24 ist der Schaltzustand des Getriebes gewissermaßen "eingefroren", es findet also keine Betätigung eines Doppelkolbens S1 bis S4 in irgendeine Richtung statt.

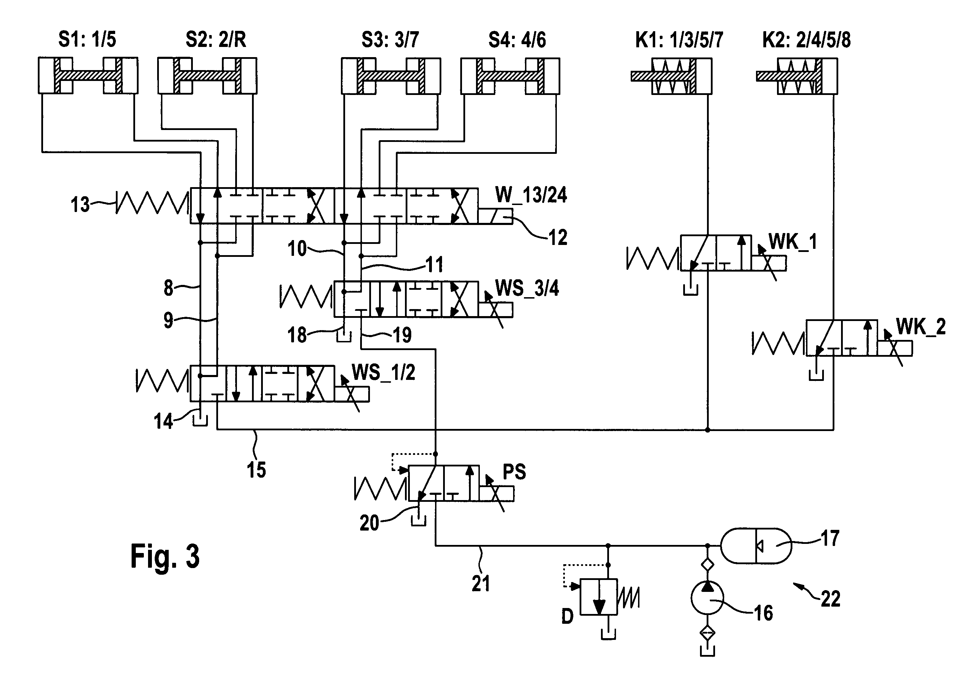

Fig. 3 zeigt ein zweites Ausführungsbeispiel eines erfindungsgemäßen hydraulischen Systems. Bei diesem sind die Kupplungssteuerventile WK_1 und WK_2 zur Kupplungsbetätigung unmittelbar mit dem Ausgang des Druckregelventils PS verbunden. Das Druckregelventil PS dient hier gleichzeitig der Absicherung und Druckregelung für die Schaltzylinder S1 bis S4 sowie der Absicherung der Kupplungsbetätigung im Fehlerfall. Im stromlosen Zustand des Druckregelventils PS sind beide Kupplungen K1 und K2 geöffnet. Daher kann auf das Schaltventil EK verzichtet werden.

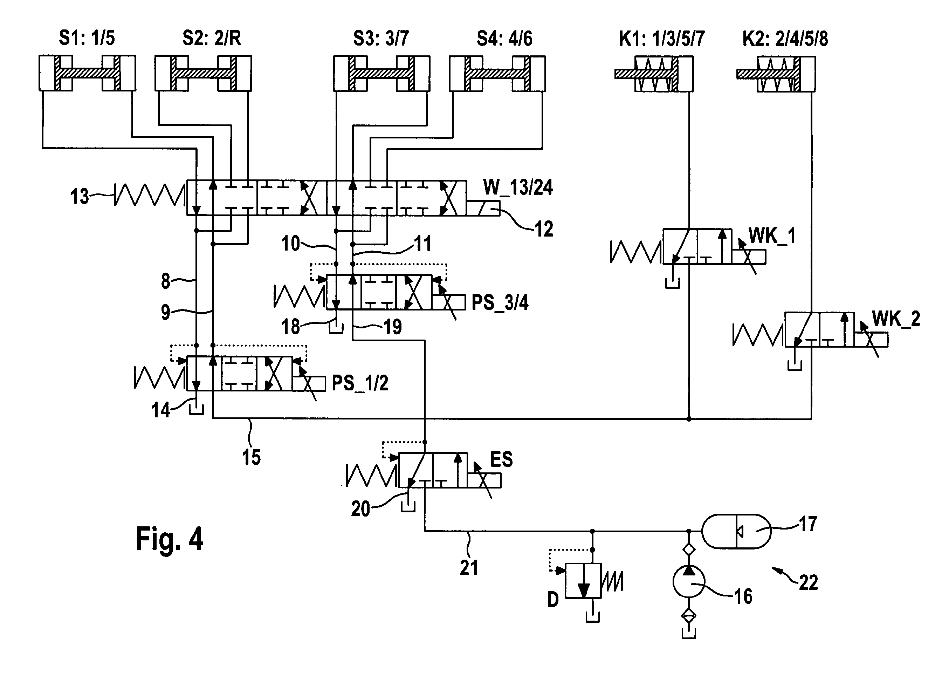

Fig. 4 zeigt ein weiteres Ausführungsbeispiel eines erfindungsgemäßen hydraulischen Systems. Bei diesem sind die Schaltwegregelventile WS_1/2 und WS_3/4 als 4/3-Wegeventile realisiert. Die Schaltwegregelventile sind hier als PS_1/2 und PS_3/4 bezeichnet. Gegenüber den Ausführungsformen der Figuren 2 und 3 wird hier jeweils auf eine Schaltstellung, in der beide Ausgänge mit dem niedrigen Systemdruck verbunden sind, verzichtet. Beide Schaltwegregelventile PS_1/2 und PS_3/4 verfügen über Rückführungen, diese sind hier durch gestrichelte Linien mit einem Pfeil, die von den jeweiligen Ausgängen zu dem Ventil rückgeführt sind, gekennzeichnet versehen. Die Rückführungen beaufschlagen die jeweiligen Kolben der Proportionalventile mit einem Druck, der eine Betätigungskraft auf den Ventilschieber ausübt. Die Schaltwegregelventile PS_1/2 und PS_3/4 zur Getriebeschaltung sowie die beiden Kupplungssteuerventile WK_1 und WK_2 zur Kupplungsbetätigung sind über ein als 3/2-Wegeventil und Schaltventil ausgeführtes Notöffnungsventil ES, das das Druckregelventil PS gemäß Fig. 3 ersetzt, mit der Druckerzeugungseinheit 22 verbunden. Gegenüber dem Ausführungsbeispiel der Fig. 3 wird so ein weiteres Proportionalventil durch ein einfacheres Schaltventil ersetzt.

### Bezugszeichenliste

- 1: Doppelkupplungsgetriebe
- 2: Antriebswelle
- 3: Kurbelwelle
- 4: innere Eingangswelle
- 5: äußere Eingangswelle
- 6: Erste Abtriebswelle
- 7: Zweite Abtriebswelle
- 8: Hydraulikleitung
- 9: Hydraulikleitung
- 10: Hydraulikleitung
- 11: Hydraulikleitung
- 12: Aktor
- 13: Feder
- 14: Eingang WS_1/2
- 15: Eingang WS_1/2
- 16: Hydraulikpumpe
- 17: Hydraulikspeicher
- 18: Eingang WS_3/4
- 19: Eingang WS_3/4
- 20: Eingang PS
- 21: Eingang PS
- 22: Druckerzeugungseinheit
- S1-S4: Doppelkolben
- Fn (n=1, 2 ...): Festräder
- Ln (n=1, 2, ...): Losräder
- W_13/24: Wählschieber
- WS_1/2: Schaltwegregelventil
- PS_1/2 WS_3/4: Schaltwegregelventil
- PS_3/4 WK_1: Kupplungssteuerventil
- WK_2: Kupplungssteuerventil
- PS: Druckregelventil
- ES: Notöffnungsventil
- EK: Notöffnungsventil
- K1, K2: Kolben zur Kupplungsbetätigung der Fahrzeugkupplungen K1, K2

## Patentansprüche

1. Hydraulisches System zur Steuerung eines Doppelkupplungsgetriebes (1), wobei das Doppelkupplungsgetriebe (1) zwei Getriebestränge umfasst, die jeweils mittels einer Fahrzeugkupplung mit einer Kurbelwelle (3) einer Kraftmaschine verbindbar sind, wobei die Getriebestränge schaltbare Gänge umfassen, die durch hydraulisch mit Druck beaufschlagbare Doppelkolben (S1, S2, S3, S4) geschaltet werden, **dadurch gekennzeichnet, dass** das hydraulische System einen Wählschieber (W _13/24) umfasst, durch den in beiden Getriebesträngen jeweils genau ein Doppelkolben (S1 oder S2, S3 oder S4) hydraulisch leitend mit je einem dem Getriebestrang zugeordneten Schaltwegregelventil (WS_1/2, PS_1/2, WS_3/4, PS_3/4), das den Fluss von Hydraulikfluid in beide Durchflussrichtungen steuern kann, verbunden wird.

2. Hydraulisches System nach Anspruch 1, **dadurch gekennzeichnet, dass** das Doppelkupplungsgetriebe n Gänge in zwei Getriebesträngen umfasst und der Wählschieber (W_13/24) ein (n+4)/(n/4)-Wegeventil ist.

3. Hydraulisches System nach Anspruch 2, **dadurch gekennzeichnet, dass** der Wählschieber (W_13/24) ein 6/2-Wegeventil ist.

4. Hydraulisches System nach Anspruch 2, **dadurch gekennzeichnet, dass** der Wählschieber (W_13/24) ein 8/2-Wegeventil ist.

5. Hydraulisches System nach Anspruch 3 oder 4, **dadurch gekennzeichnet, dass** das einem Getriebestrang zugeordnete Schaltwegregelventil (WS_1/2, PS_1/2, WS_3/4, PS_3/4) ein stufenlos verstellbares Proportionalventil ist.

6. Hydraulisches System nach Anspruch 5, **dadurch gekennzeichnet, dass** das Schaltwegregelventil (WS_1/2, PS_1/2, WS_3/4, PS_3/4) ein 4/4-Wegeventil ist.

7. Hydraulisches System nach Anspruch 5, **dadurch gekennzeichnet, dass** das Schaltwegregelventil (WS_1/2, PS_1/2, WS_3/4, PS_3/4) ein 4/3-Wegeventil ist.

8. Hydraulisches System nach Anspruch 7, **dadurch gekennzeichnet, dass** das Schaltwegregelventil (PS_1/2, PS_3/4) ausgangsseitige Druckrückführungen umfasst, die so angeordnet sind, dass auf ein Schaltmittel des Schaltwegregelventils (PS_1/2, PS_3/4) eine Stellkraft ausgeübt wird.

9. Hydraulisches System nach einem der vorhergehenden Ansprüche, **dadurch gekennzeichnet, dass** der Wählschieber (W_13/24) und die Schaltwegregelventile (WS_1/2, PS_1/2, WS_3/4, PS_3/4) jeweils durch einen elektrischen Aktor betätigt werden.

10. Hydraulisches System nach Anspruch 9, **dadurch gekennzeichnet, dass** das Schaltwegregelventil (PS_1/2, PS_3/4) bei stromlosem Aktor einen ersten Eingang mit einem ersten Ausgang sowie einen zweiten Eingang mit einem zweiten Ausgang verbindet und bei maximal bestromtern Aktor den ersten Eingang mit dem zweiten Ausgang sowie den zweiten Eingang mit dem ersten Ausgang verbindet und bei etwa mittlerer Bestromung geschlossen ist.

11. Hydraulisches System nach einem der vorhergehenden Ansprüche, **dadurch gekennzeichnet, dass** die Fahrzeugkupplungen mittels hydraulischer Betätigungsmittel (K1, K2), die jeweils durch ein Kupplungssteuerventil (WK_1, WK_2) angesteuert werden, betätigt werden, wobei die Schaltwegregelventile (WS_1/2, PS_1/2, WS_3/4, PS_3/4) sowie die Kupplungssteuerventile über ein gemeinsames Abschaltventil (ES, PS) mit einem Druckerzeugungsmittel verbunden sind.

12. Hydraulisches System nach Anspruch 11, **dadurch gekennzeichnet, dass** das Abschaltventil (ES, PS) ein Proportionalventil ist.

13. Hydraulisches System nach Anspruch 11, **dadurch gekennzeichnet, dass** das Abschaltventil (ES, PS) ein Schaltventil ist.

14. Hydraulisches System nach Anspruch 12 oder 13, **dadurch gekennzeichnet, dass** das Abschaltventil (ES, PS) ein 3/2-Wegeventil ist.

15. Hydraulisches System nach einem der vorhergehenden Ansprüche zur Verwendung mit einem Doppelkupplungsgetriebe mit acht Gängen, **dadurch gekennzeichnet, dass** das hydraulische System sieben Schieberventile umfasst.

16. Hydraulisches System nach einem der vorhergehenden Ansprüche zur Verwendung mit einem Doppelkupplungsgetriebe mit acht Gängen, **dadurch gekennzeichnet, dass** das hydraulische System sechs Schieberventile umfasst.

17. Doppelkupplungsgetriebe mit einem hydraulischen System nach einem der vorhergehenden Ansprüche.
